# FASCICULE DE BREVET EUROPEEN

(11) **EP 0 509 866 B1**
(45) Date de publication et mention de la délivrance du brevet: **06.07.1994**
(21) Numéro de dépôt: 92400881.6
(22) Date de dépôt: 31.03.1992
(51) Int. Cl.: B60T 13/57, B60T 13/569

(54) **Servomoteur pneumatique**
Pneumatischer Servomotor
Pneumatic servomotor

(30) Priorité: 17.04.1991 FR 9104702
(43) Date de publication de la demande: 21.10.1992
(73) Titulaire: ALLIEDSIGNAL EUROPE SERVICES TECHNIQUES, 93700 Drancy (FR)
(72) Inventeur: Gautier, Jean-Pierre, Bendix Europe, F-93700 Drancy (FR); Verbo, Ulysse, Bendix Europe, F-93700 Drancy (FR)
(74) Mandataire: Bentz, Jean-Paul

(56) Documents cités:
- FR-A- 1 279 454
- FR-A- 2 537 524

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique un piston comportant une partie tubulaire arrière et une jupe et qui, à l'aide d'une membrane déroulante, définit une chambre avant reliée en permanence à une source de dépression et une chambre arrière reliée sélectivement à la chambre avant ou à l'atmosphère par un moyen de valve actionné par une tige de commande susceptible de s'appuyer, par l'intermédiaire d'un plongeur, sur l'une des faces d'un disque de réaction solidaire d'une tige de poussée, un ressort de rappel de la tige de commande étant disposé entre la jupe du piston et le plongeur, le moyen de valve comportant un clapet coopérant par une partie active rigidifiée par un insert avec un premier siège de valve formé sur le plongeur et avec un second siège de valve formé sur le piston, le clapet étant formé par une membrane tubulaire souple, la partie active du clapet étant située entre les deux extrémités de la membrane tubulaire souple.

De tels servomoteurs, tels qu'illustrés par exemple par le document EP-A-0 004 477, présentent quelques inconvénients. C'est ainsi que, pour éviter que la tige de commande n'ait une course morte trop longue, on est obligé de concevoir le moyen de valve de façon telle que la "levée de clapet" entre le clapet et le second siège de valve soit la plus faible possible. D'autre part, lors du freinage, le passage offert à l'air atmosphérique vers la chambre arrière est réduit, de même que le passage offert à l'air de la chambre arrière vers la chambre avant lors du défreinage. Le fonctionnement de ces servomoteurs est donc accompagné de bruits d'aspiration d'air, qui peuvent devenir gênants, d'autant plus que la structure du moyeu du piston, présentant un seul passage radial vers la chambre arrière et un seul passage axial vers la chambre avant, induit en plus des turbulences importantes dans l'air en mouvement. Un autre inconvénient dû à ces passages d'air réduits et turbulents réside dans le fait que l'air se trouve fortement ralenti dans ses différents mouvements entre l'atmosphère, la chambre arrière et la chambre avant, et donc que les servomoteurs présentent des temps de réponse importants.

Le document FR-A-2 537 524, correspondant au préambule de la revendication principale, essaie d'apporter une solution à ces inconvénients, mais comporte encore un moyen de valve classique logé dans la partie centrale tubulaire formée à l'arrière de l'enveloppe du servomoteur. Celle-ci doit donc être de conception spéciale. De plus, selon ce document, la structure du moyeu de piston présente un seul passage radial vers la chambre arrière et un seul passage axial vers la chambre avant, induisant également des turbulences importantes dans l'air en mouvement, nuisibles pour le temps de réponse du servomoteur par le ralentissement de l'air qu'elles imposent, et génératrices de bruits de fonctionnement.

La présente invention a par conséquent pour objet de prévoir un servomoteur dont le fonctionnement soit silencieux et dont le temps de réponse soit le plus faible possible et ce de façon simple, fiable et économique. Dans ce but, l'invention a pour objet un servomoteur dans lequel les passages d'air entre l'atmosphère et la chambre arrière d'une part, la chambre arrière et la chambre avant d'autre part, aient la plus grande section possible sans présenter d'obstacles pouvant engendrer des turbulences.

Selon la présente invention, le clapet comporte des ouvertures permettant la communication entre la chambre avant et la chambre arrière.

Selon une caractéristique avantageuse de l'invention, les ouvertures pratiquées dans le clapet sont situées dans sa partie active, entre les premier et second siège de valve.

D'autres buts, caractéristiques et avantages ressortiront de la description qui suit d'un mode de réalisation de la présente invention, donnée à titre non limitatif, en référence aux dessins annexés dans lesquels :
- La Figure 1 est une vue de côté, en coupe longitudinale, représentant la partie centrale d'un servomoteur pneumatique d'assistance au freinage de type connu, par exemple du document EP-A-0 004 477 précité et
- La Figure 2 est une vue de côté, en demi-coupe longitudinale, représentant la partie centrale d'un servomoteur pneumatique d'assistance au freinage réalisé conformément à la présente invention.

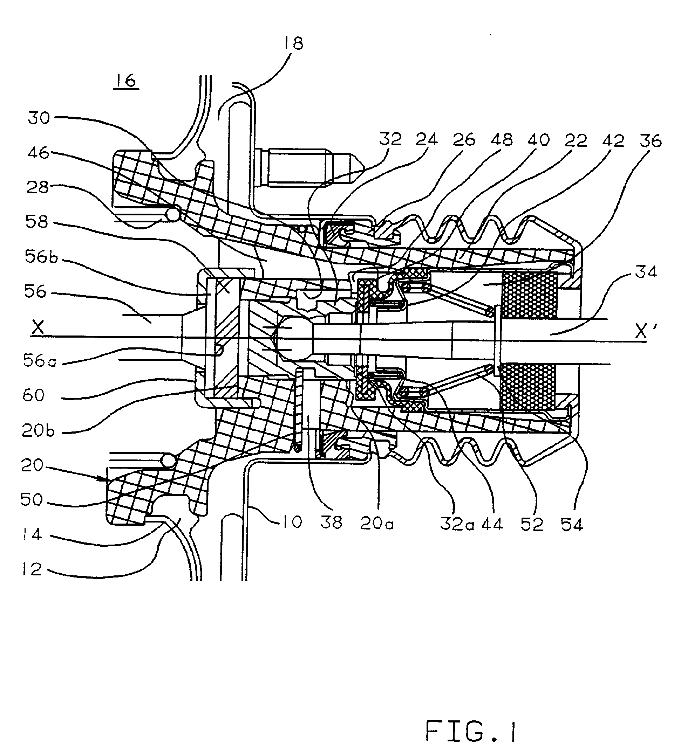

La Figure 1 représente une partie d'un servomoteur d'assistance au freinage prévu pour être placé de façon habituelle entre la pédale de frein d'un véhicule et le maître-cylindre commandant le circuit de freinage hydraulique de ce véhicule. Par convention, on appelle avant du servomoteur la partie de ce dernier tournée vers le maître-cylindre et arrière du servomoteur la partie tournée vers la pédale de frein.

Le servomoteur de la Figure 1 comprend une enveloppe extérieure 10 en forme de coquille, présentant une symétrie de révolution autour d'un axe X-X′. Seule la partie centrale arrière de cette enveloppe 10 est représentée sur la Figure 1.

Une membrane déroulante souple en élastomère 12, renforcée dans sa partie centrale par un disque support métallique 14 encore appelé jupe, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X′ du servomoteur. Ce piston creux 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre le piston 20 et la paroi avant (non représentée) de l'enveloppe extérieure 10 maintient normalement le piston 20 et la jupe 14 dans une position arrière de repos illustrée sur la Figure 1, dans laquelle la chambre arrière 18 présente son volume minimal et la chambre avant 16 son volume maximal.

Dans sa partie centrale située entre la partie arrière tubulaire 22 et la partie avant dans laquelle sont fixées la membrane 12 et la jupe 14, le piston 20 présente un alésage 30 dans lequel est reçu en coulissement un plongeur 32 présentant également une symétrie de révolution autour de l'axe X-X′. L'extrémité avant d'une tige de commande 34 du servomoteur, disposée également selon l'axe X-X′, est montée rotulante dans le plongeur 32. L'extrémité arrière (non représentée) de cette tige 34, qui fait saillie à l'extérieur de la partie tubulaire 22 du piston 20, est commandée directement par la pédale de frein du véhicule (non représentée).

L'espace annulaire 36 délimité entre la tige de commande 34 et la partie tubulaire du piston 20 débouche vers l'atmosphère extérieure à l'arrière du servomoteur, par exemple par l'intermédiaire d'un filtre à air. Vers l'avant, ce même espace annulaire peut communiquer avec la chambre arrière 18 au travers d'un passage radial 38 formé dans la partie centrale du piston, lorsque des moyens d'assistance commandés par le plongeur 32 sont actionnés.

De façon classique, ces moyens d'assistance comprennent une valve trois voies comportant un clapet annulaire 40 monté dans la partie tubulaire du piston et deux sièges de valve annulaires 20a et 32a formés respectivement sur la partie centrale du piston 20 et sur le plongeur 32.

Le clapet 40 constitue l'extrémité avant, de plus petit diamètre, d'un manchon souple en élastomère dont l'extrémité arrière se termine par un bourrelet monté de façon étanche à l'intérieur de la partie tubulaire 22 du piston 20. Ce bourrelet est maintenu en place par une coupelle métallique 42, sur laquelle prend appui un ressort de compression 44 tendant à déplacer le clapet 40 vers l'avant.

Le siège de valve annulaire 32a est formé sur la face d'extrémité arrière du plongeur 32. De façon comparable, le siège de valve annulaire 20a est formé sur la face d'extrémité arrière de la partie centrale du piston 20, autour du siège 32a. Selon la position du plongeur 32 à l'intérieur du piston 20, cet agencement permet au clapet 40 d'être constamment en appui étanche avec l'un au moins des sièges de valve 32a et 20a sous l'action du ressort 44.

Un second passage 46 est formé dans la partie centrale du piston 20, approximativement parallèlement à son axe X-X′, pour faire communiquer la chambre avant 16 du servomoteur avec une chambre annulaire 48 formée autour du clapet 40, à l'intérieur de la partie tubulaire 22 du piston 20. Lorsque le plongeur 32 occupe sa position arrière de repos illustrée sur la Figure 1, dans laquelle le clapet 40 est en appui étanche sur le siège 32a du plongeur 32 et écarté du siège 20a du piston 20, les chambres avant 16 et arrière 18 du servomoteur communiquent ainsi entre elles par le passage 46, la chambre annulaire 48 et le passage 38.

D'une manière elle aussi classique, au moins un organe de butée 50 monté dans la partie centrale du piston 20 délimite la course axiale du plongeur 32 à l'intérieur de ce dernier. Le plongeur 32 est normalement maintenu dans la position arrière de repos définie par l'organe 50 au moyen d'un ressort de compression 52 interposé entre la coupelle 42 et une rondelle 54 elle-même en appui sur un épaulement formé sur la tige de commande 34.

Dans sa partie centrale, le piston 20 comprend une face avant annulaire 20b au centre de laquelle débouche l'alésage 30. Cette face avant annulaire 20b du piston 20 agit sur une face arrière 56a d'une tige de poussée 56, au travers d'un disque de réaction 58 en un matériau déformable tel qu'un élastomère. De façon plus précise, la tige de poussée 56 et le disque de réaction 58 sont disposés selon l'axe X-X′ du servomoteur, dans le prolongement de la tige de commande 34 et du plongeur 32. La surface arrière 56a de la tige de poussée 56 est formée sur une plaque en forme de disque 56b constituant l'extrémité arrière de la tige 56. La plaque 56b ainsi que le disque de réaction 58 sont coiffés par un capot 60 centré sur l'axe X-X′ du servomoteur et coopérant avec une gorge annulaire formée sur la partie centrale du piston 20, autour de la face avant annulaire 20b de ce dernier.

Le fonctionnement de ce servomoteur connu est classique et peut être décrit succinctement de la façon suivante.

Lorsque le servomoteur est installé sur un véhicule, la chambre avant 16 communique en permanence avec une source de vide.

Dans un premier temps, l'enfoncement de la pédale de frein par le conducteur a pour effet d'égaler l'effort de précontrainte du ressort 52 diminué de l'effort de précontrainte du ressort 44. Au cours de ce léger déplacement de la tige de commande 34 et du plongeur 32, le clapet 40, sous l'action du ressort 44, suit le siège 32a du plongeur 32, jusqu'à ce qu'il vienne au contact du siège 20a du piston ; les chambres avant 16 et arrière 18 du servomoteur sont alors isolées l'une de l'autre.

Dans une deuxième phase de l'actionnement du frein, le plongeur 32 est déplacé suffisamment vers l'avant pour que le clapet 40 soit en contact étanche avec le siège 20a du piston et commence à s'éloigner du siège 32a du plongeur. Dans ces conditions, la chambre arrière 18 du servomoteur est isolée de la chambre avant 16 et entre en communication avec l'atmosphère.

La chambre arrière 18, qui communiquait auparavant avec la chambre avant 16 et se trouvait donc sous une pression réduite, aspire donc l'air à la pression atmosphérique à travers le passage de valve de faible section entre le clapet 40 et le siège de plongeur 32a. Il s'ensuit donc une entrave importante au passage de l'air, et donc un allongement du temps de réponse. De plus, l'air qui provient par exemple de la moitié supérieure de la Figure 1 pour pénétrer dans le passage 38, devra contourner la tige de commande 34 et le plongeur 32 pour arriver au passage radial 38, d'où un écoulement turbulent et bruyant de l'air, ajouté aux sifflements dus à la traversée de l'interstice entre le clapet 40 et le siège de plongeur 32a.

Les mêmes phénomènes se produisent lors d'un défreinage, lorsque l'air sous une pression plus élevée est amené à passer de la chambre arrière 18 vers la chambre avant 16 par le passage radial 38, la chambre 48 autour du plongeur 32, l'interstice entre le clapet 40 et le siège de piston 20a et le passage axial 46. Ces phénomènes ne seront donc pas décrits en détail.

On comprend donc qu'il est hautement désirable de réaliser un servomoteur où, pour une même course de la tige de commande 34, d'une part la section offerte au passage de l'air. soit la plus grande possible, et d'autre part l'écoulement de l'air soit le moins turbulent possible.

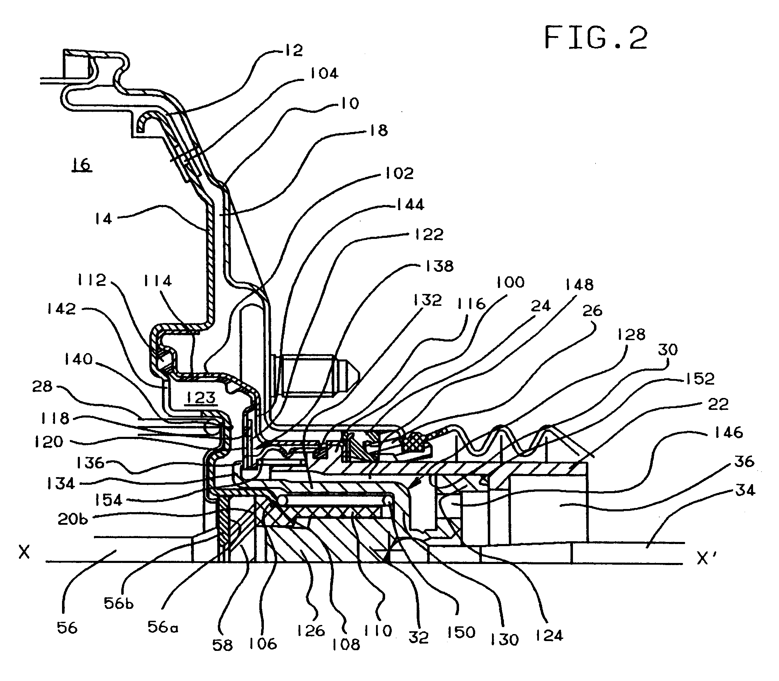

Ce but est atteint grâce à l'invention dont un exemple d'un mode de réalisation est représenté sur la Figure 2, où les éléments identiques à ceux de la Figure 1 portent les mêmes numéros de référence.

On voit sur la Figure 2 que le piston et le plongeur ont été profondément modifiés pour atteindre ce but. Le piston est composite, il comporte une partie arrière tubulaire 22 et comporte au voisinage de son extrémité avant un renflement 100 maintenant une pièce de révolution autour de l'axe X-X′ formant un voile intermédiaire de piston 102 de forme générale approximativement tronconique. Sur l'extrémité avant de plus grand diamètre du voile 102 est fixée, par exemple emmanchée à force, la jupe 14, sur le bord périphérique extérieur de laquelle est fixée la membrane déroulante 12, par exemple au moyen d'ouvertures 104 pratiquées près du bord de la jupe 14 pour parfaire l'accrochage de la matière de la membrane 12. Le bord périphérique intérieur de la jupe 14 est replié en direction de l'axe X-X′ de façon à former un épaulement 106 coopérant avec un épaulement 108 formé sur un manchon 110 présentant une face annulaire avant 20b destinée à coopérer avec le disque de réaction 58 comme on l'a décrit en relation avec la Figure 1.

Entre la jupe 14 et l'extrémité avant de plus grand diamètre du voile 102 est maintenu de façon étanche un bourrelet 112 formant l'extrémité avant d'une membrane tubulaire souple 114 dont l'extrémité arrière forme un bourrelet 116 maintenu de façon étanche entre l'extrémité arrière de plus petit diamètre du voile 102 et l'extrémité avant de la partie tubulaire arrière 22.

Une partie intermédiaire de la membrane tubulaire souple 114 reçoit sur sa face arrière un insert annulaire 118, de façon à la rigidifier dans un plan perpendiculaire à l'axe X-X′. La membrane 114 et l'insert 118 comportent des ouvertures 120 et 122 respectivement, disposées les unes en face des autres.

On voit donc que la partie de membrane 114 rigidifiée par l'insert 118 peut se déplacer axialement dans le volume annulaire 123 situé entre la face arrière de la jupe 14 et la face avant du voile intermédiaire de piston 102, la jupe 14 et le voile 102 étant solidaires l'un de l'autre, le voile 102 étant lui-même solidaire de la partie arrière tubulaire 22 du piston.

Le plongeur 32 est formé avec une partie arrière 124 coulissant dans l'alésage 30 de la partie tubulaire 22 et une partie avant 126 coulissant à l'intérieur du manchon 110. Entre les parties arrière 124 et avant 126 du plongeur 32 est venue de matière une extension 128 s'étendant d'abord radialement vers l'extérieur pour former une partie annulaire 130, puis, à partir du bord périphérique extérieur de celle-ci, axialement vers l'avant pour former une partie cylindrique 132,
s'étendant entre le manchon 110 et la partie tubulaire 22 et pénétrant dans le volume annulaire 123. La partie cylindrique 132 est elle-même prolongée radialement vers l'extérieur par une partie annulaire 134, venant dans le volume annulaire 123 en avant de la partie de la membrane 114 rigidifiée par l'insert 118 et dont le diamètre extérieur est légèrement supérieur au diamètre intérieur de l'insert 118. La partie annulaire 134 comporte sur son bord périphérique extérieur un renflement 136, apte à former un premier siège de valve avec la membrane 114 rigidifiée par l'insert 118 formant quant à elle un clapet 138.

Un deuxième siège de valve 140 est formé par un renflement sur la face arrière de la jupe 14, selon un cercle de diamètre légèrement inférieur au diamètre extérieur de l'insert 118. Le renflement 140 pourra avantageusement être formé sur une partie convexe de la face arrière de la jupe 14, de sorte que la partie concave correspondante de la face avant de la jupe 14 forme un logement pour le ressort de compression 28. En variante, on pourra prévoir que cette partie de la face arrière de la jupe 14 soit plane, et de former un renflement selon le cercle défini ci-dessus sur la face avant de la membrane 114 rigidifiée par l'insert 118.

Des ouvertures 142 sont pratiquées dans la jupe 14 pour faire communiquer la chambre avant 16 avec la partie du volume annulaire 123 située devant le clapet 138. De même, des ouvertures 144 sont pratiquées dans le voile intermédiaire 102 pour faire communiquer la chambre arrière 18 avec la partie du volume annulaire 123 située derrière le clapet 138. Enfin, des ouvertures 146 sont pratiquées dans la partie arrière 124 du plongeur 32 pour faire communiquer l'espace annulaire 36 derrière le plongeur 32, où règne la pression atmosphérique, avec le volume annulaire 123, par l'intermédiaire de l'espace annulaire 148 entre la partie cylindrique 132 du plongeur 32 et la partie tubulaire 22 du piston.

Le plongeur 32 et la tige de commande 34 sont ramenés dans leur position arrière de repos par un ressort de rappel 150, prenant appui d'une part sur la face arrière de la partie de la jupe 14 qui forme l'épaulement 106, et d'autre part sur la face avant de la partie annulaire 130 de l'extension 128 du plongeur 32, la jupe 14 étant elle-même rappelée dans sa position arrière de repos par le ressort 28. Dans sa position arrière de repos, le plongeur 32 vient en butée sur un épaulement 152 formé à l'intérieur de la partie arrière tubulaire 22 du piston. Le clapet 138 est sollicite vers l'avant par un ressort de clapet 154 prenant appui d'une part sur la face arrière de la membrane 114 rigidifiée par l'insert 118 formant le clapet 138, et d'autre part sur la face avant du renflement 100 formé à l'extrémité avant de la partie arrière tubulaire 22.

On voit donc qu'on a réalisé conformément à l'invention un servomoteur comportant un piston 20 formé par une paroi mobile composite constituée de la jupe 14, équipée de la membrane déroulante 12, et solidaire du voile intermédiaire 102, lui-même solidaire de la partie arrière tubulaire 22, ce piston étant susceptible d'agir sur la tige de poussée 56, au travers du disque de réaction 58, par l'intermédiaire de la face annulaire avant 20b du manchon 110, ce dernier servant également d'élément de guidage pour le plongeur 32.

Les moyens de valve sont constitués par le clapet 138 formé sur une partie intermédiaire d'une membrane tubulaire fixée par ses extrémités à la paroi mobile composite, coopérant avec un siège de valve 136 formé sur le plongeur et un siège de valve 140 formé sur la paroi mobile composite.

De plus, les moyens de valve sont situés en avant de l'extrêmité avant du plongeur 32, et plus précisément en avant de la partie de l'enveloppe 10 s'étendant perpendiculairement à l'axe X-X′. Il en résulte l'avantage que l'invention peut être utilisée avec des enveloppes de servomoteur classiques sans nécessiter pour elles de fabrication spéciale.

Le fonctionnement de ce servomoteur réalisé conformément à l'invention se déduit aisément des explications qui précèdent. Le servomoteur étant au repos tel qu'on l'a représenté sur la Figure 2, la chambre avant 16 est en communication avec la chambre arrière 18 par les ouvertures 142, le passage de valve 140-138 dans le volume 123, et les ouvertures 120, 122, et 144. Un actionnement de la tige de commande 34 a pour effet de faire avancer le plongeur 32 à l'encontre de l'action du ressort 150. Le clapet 138 reste plaqué sur le siège de valve 136 du plongeur 32 sous l'action du ressort 154, jusqu'à ce qu'il vienne au contact du siège de valve 140 de la cloison mobile, fermant ainsi le passage de valve 140-138 et isolant les chambres avant 16 et arrière 18 l'une de l'autre.

En continuant d'actionner la tige de commande 34 et le plongeur 32, la partie cylindrique 132 de celui-ci continue de pénétrer dans le volume 123. Le clapet 138 vient alors en appui sur le siège de valve 140 du piston, tandis que le siège de valve 136 du plongeur 32 s'écarte du clapet 138.

De l'air à la pression atmosphérique peut alors pénétrer dans la chambre arrière 18 par les ouvertures 146 dans la partie arrière du plongeur 32, l'espace annulaire 148 entre la partie cylindrique 132 du plongeur 32 et la partie tubulaire 22 du piston, le passage de valve 136-138, les ouvertures 120 et 122 formées dans la membrane 114 et l'insert 118, et enfin les ouvertures 144 dans le voile intermédiaire 102.

On voit ainsi que, grâce à l'invention, l'air est admis dans la chambre arrière 18 à travers le passage de valve 136-138 qui est d'un diamètre plusieurs fois plus grand que dans un servomoteur classique tel que décrit en relation avec la Figure 1. 0n a ainsi pu réaliser des passages de valve 136-138 d'un diamètre égal à cinq fois le diamètre d'un passage de valve classique. Il s'ensuit, dans cet exemple, que la section de passage offerte à l'air est elle aussi multipliée par cinq, et donc que le débit d'air vers la chambre arrière est lui aussi multiplié par cinq. On obtient donc bien un servomoteur dont le temps de réponse est considérablement raccourci. Il est bien entendu que la valeur de cinq n'est pas critique, mais a seulement été choisie comme exemple.

Tout autre facteur d'agrandissement du passage de valve par rapport à un servomoteur classique pourra être choisie en fonction du résultat désiré.

On comprendra que le même phénomène de réduction du temps de réponse du servomoteur se produit lors d'un défreinage. En effet, lorsque la force appliquée à la tige de commande décroît, celle-ci recule et entraîne dans son mouvement le plongeur 32. Ce faisant, le siège de valve 136 du plongeur 32 revient au contact du clapet 138, le siège de valve 140 étant toujours au contact du clapet 138. Quand le plongeur 32 continue de reculer, le siège de valve 136 du plongeur fait alors s'éloigner le clapet 138 du siège de valve 140. L'air contenu dans la chambre arrière 18 est alors aspiré dans la chambre avant par les ouvertures 144 dans le voile intermédiaire 102, les ouvertures 122 et 120 dans la membrane 114 et l'insert 118, le passage de valve 138-140 et enfin les ouvertures 142 dans la jupe 14. Pour permettre un re-équilibrage rapide de pression (en l'occurence de dépression) entre ces deux chambres 16 et 18, le plongeur 32 est autorisé à reculer d'une distance relativement importante vis à vis du corps de valve et donc du piston 20, le passage de valve entre le siège de valve 140 du piston 20 et le clapet 138 étant déterminé de façon précise par la venue en butée, sous l'effet du ressort de rappel 150, de la partie arrière 124 du plongeur contre l'épaulement 152 formé à l'intérieur de la partie arrière tubulaire 22 du piston 20. On voit donc là encore que l'air est amené à s'écouler à travers le passage de valve 138-140, d'un diamètre nettement supérieur aux passages de valve classiques, et donc de surface supérieure qui permet un débit supérieur, d'où il résulte un temps de réponse très réduit en phase de défreinage.

On voit donc que grâce à la disposition des sièges de valve 136 du plongeur et 140 du piston et du clapet 138, le débit de fluide entre l'atmosphère et la chambre arrière, et entre la chambre arrière et la chambre avant, est augmenté dans des proportions notables, diminuant d'autant le temps de réponse du servomoteur tant en phase de freinage qu'en phase de défreinage.

Du fait de la disposition des moyens de valve en avant de la partie de l'enveloppe 10 s'étendant perpendiculairement à l'axe X-X′, et grâce au fait que le second siège de valve soit formé sur la jupe du piston, on voit que l'on pourra donner à la partie annulaire 134 du plongeur 32 tout diamètre extérieur désiré pour agrandir d'autant le diamètre des passages de valve 136-138 et 140 - 138 et diminuer d'autant le temps de réponse du servomoteur.

L'invention permet également de réduire dans des proportions importantes le bruit de fonctionnement du servomoteur. 0n a vu en effet que, lors du freinage, l'air s'écoule par les ouvertures 146, l'espace annulaire 148, le passage de valve 136-138, et les ouvertures 120, 122 et 144, et lors du défreinage, par les ouvertures 144, 122 et 120, le passage de valve 138-140 et les ouvertures 142. La conception particulière du servomoteur selon l'invention permet de prévoir que les ouvertures 142, 120, 122, 144 et 146 soient en nombre égal, régulièrement réparties autour de l'axe X-X′, et de sorte que leurs centres soient dans un même plan, ainsi qu'on l'a représenté sur la Figure 2. De la sorte, les masses d'air mises en mouvement lors du fonctionnement du servomoteur de la présente invention auront une vitesse dont les composantes ne seront contenues que dans un plan, par exemple celui de la Figure 2. En d'autres termes, l'écoulement de l'air dans le servomoteur est parfaitement symétrique autour de l'axe X-X′ dans tous les cas de fonctionnement, c'est-à-dire que toutes les turbulences sont éliminées, ainsi que les bruits en résultant.

On voit donc bien qu'on a réalisé conformément à la présente invention un servomoteur pneumatique dans lequel la disposition particulière des moyens de valve lui permet de fonctionner silencieusement et avec des temps de réponse très brefs. Bien entendu, l'invention n'est pas limitée au mode de réalisation qui a été décrit à titre d'exemple, mais est susceptible de recevoir de nombreuses variantes qui apparaîtront à l'homme du métier. C'est ainsi par exemple que la membrane déroulante et la membrane tubulaire souple sur laquelle est formé le clapet peuvent être formées d'une seule pièce. De même, l'invention pourra être appliquée à des servomoteurs en tandem ou à chambre additionnelle.

## Revendications

1. Servomoteur pneumatique d'assistance au freinage comportant une enveloppe (10) à l'intérieur de laquelle se trouve un piston (22, 14, 102) formé d'une partie tubulaire arrière (22) supportant une jupe (14) et qui, à l'aide d'une membrane déroulante (12), définit une chambre avant (16) reliée en permanence à une source de dépression et une chambre arrière (18) reliée sélectivement à la chambre avant (16) ou à l'atmosphère par un moyen de valve (136, 138, 140) actionné par une tige de commande (34) susceptible de s'appuyer, par l'intermédiaire d'un plongeur (32), sur l'une des faces d'un disque de réaction (58) solidaire d'une tige de poussée (56), un ressort (150) de rappel de la tige de commande (34) étant disposé entre la jupe (14) du piston et le plongeur (32), le moyen de valve (136, 138, 140) comportant un clapet (138) coopérant par une partie active rigidifiée par un insert (118) avec un premier siège de valve (136) formé sur le plongeur (32) et avec un second siège de valve (140) formé sur le piston (14), le clapet (138) étant formé par une membrane tubulaire souple (114), la partie active du clapet (138) étant située entre les deux extrémités (112, 116) de la membrane tubulaire souple (114), caractérisé en ce que le clapet (138) comporte des ouvertures (120) permettant la communication entre la chambre avant (16) et la chambre arrière (18).

2. Servomoteur selon la revendication 1, caractérisé en ce que les ouvertures (120) pratiquées dans le clapet (138) sont situées dans sa partie active entre le premier siège de valve (136) et le second siège de valve (140).

3. Servomoteur selon la revendication 1, caractérisé en ce que le piston (22, 14, 102) comporte de plus un voile intermédiaire de piston (102) définissant avec la jupe (14) du piston un volume annulaire (123).

4. Servomoteur selon la revendication 1, caractérisé en ce que le second siège de valve (140) est formé sur la jupe (14) du piston.

5. Servomoteur selon les revendications 1, 2, 3 et 4, caractérisé en ce que les premier (136) et second (140) sièges de valve et le clapet (138) sont disposés dans le volume annulaire (123).

6. Servomoteur selon la revendication 5, caractérisé en ce que des ouvertures (142) sont pratiquées dans la jupe (14) pour faire communiquer la chambre avant (16) avec le volume annulaire (123), et en ce que des ouvertures (144) sont pratiquées dans le voile intermédiaire (102) pour faire communiquer la chambre arrière (18) avec le volume annulaire (123).

7. Servomoteur selon l'une quelconque des revendications précédentes, caractérisé en ce que des ouvertures (146) sont pratiquées dans le plongeur (32) pour faire communiquer le volume annulaire (123) avec l'atmosphère.

8. Servomoteur selon la revendication 7, caractérisé en ce que les ouvertures (146, 120, 142, 144) pratiquées dans le plongeur (32), le clapet (138), la jupe (14) et le voile (102) sont régulièrement réparties autour de l'axe de symétrie du servomoteur, en nombre égal et ont leurs centres dans un même plan.

## Patentansprüche

1. Pneumatischer Servomotor zur Bremsunterstützung, mit einem Gehäuse (10), in dessen Inneren sich ein Kolben (22, 14, 102) befindet, der aus einem rohrförmigen hinteren Abschnitt (22) gebildet ist, der eine Schürze (14) trägt und mit Hilfe einer Abrollmembran (12) eine permanent mit einer Unterdruckquelle verbundene vordere Kammer (16) und eine hintere Kammer (18) abgrenzt, die selektiv mit der vorderen Kammer (16) oder mit der Atmosphäre über ein Ventilmittel (136, 138, 140) verbunden ist, das von einer Steuerstange (34) betätigt wird, die in der Lage ist, sich über einen Tauchkolben (32) an einer der Seiten einer fest mit einer Schubstange (56) verbundenen Reaktionsscheibe (58) abzustützen, wobei zwischen der Schürze (14) des Kolbens und dem Tauchkolben (32) eine Rückstellfeder (150) für die Steuerstange (34) angeordnet ist, wobei das Ventilmittel (136, 138, 140) ein Ventilelement (138) enthält, das über einen von einem Einsatz (118) verstärkten aktiven Abschnitt mit einem auf dem Tauchkolben (32) gebildeten ersten Ventilsitz (136) und mit einem auf dem Kolben (14) gebildeten zweiten Ventilsitz (140) zusammenwirkt, wobei das Ventilelement (138) durch eine nachgiebige rohrförmige Membran (114) gebildet ist, wobei der aktive Abschnitt des Ventilelementes (138) zwischen den beiden Enden (112, 116) der nachgiebigen rohrförmigen Membran (114) angeordnet ist, dadurch gekennzeichnet, daß das Ventilelement (138) Öffnungen (120) enthält, die die Verbindung zwischen der vorderen Kammer (16) und der hinteren Kammer (18) ermöglichen.

2. Servomotor nach Anspruch 1, dadurch gekennzeichnet, daß die Öffnungen (120), die im Ventilelement (138) ausgebildet sind, in seinem aktiven Abschnitt zwischen dem ersten Ventilsitz (136) und dem zweiten Ventilsitz (140) angeordnet sind.

3. Servomotor nach Anspruch 1, dadurch gekennzeichnet, daß der Kolben (22, 14, 102) zusätzlich eine Kolben-Zwischenabdeckung (102) enthält, die zusammen mit der Schürze (14) des Kolbens ein ringförmiges Volumen (123) abgrenzt.

4. Servomotor nach Anspruch 1, dadurch gekennzeichnet, daß der zweite Ventilsitz (140) auf der Schürze (14) des Kolbens gebildet ist.

5. Servomotor nach den Ansprüchen 1, 2, 3 und 4, dadurch gekennzeichnet, daß der erste Ventilsitz (136), der zweite Ventilsitz (140) und das Ventilelement (138) in dem ringförmigen Volumen (123) angeordnet sind.

6. Servomotor nach Anspruch 5, dadurch gekennzeichnet, daß in der Schürze (14) Öffnungen (142) ausgebildet sind, um die vordere Kammer (16) mit dem ringförmigen Volumen (123) zu verbinden, und daß in der Zwischenabdeckung (102) Öffnungen (144) ausgebildet sind, um die hintere Kammer (18) mit dem ringförmigen Volumen (123) zu verbinden.

7. Servomotor nach einem der vorhergehenden Ansprüche, dadurch gekennzeichnet, daß im Tauchkolben (32) Öffnungen (146) ausgebildet sind, um das ringförmige Volumen (123) mit der Atmosphäre zu verbinden.

8. Servomotor nach Anspruch 7, dadurch gekennzeichnet, daß die in dem Tauchkolben (32), dem Ventilelement (138), der Schürze (14) und der Abdeckung (102) ausgebildeten Öffnungen (146, 120, 142, 144) gleichmäßig um die Symmetrieachse des Servomotors herum verteilt sind, von gleicher Anzahl sind und mit ihren Mittelpunkten in der gleichen Ebene liegen.

## Claims

1. Pneumatic brake-booster possessing a casing (10), within which is located a piston (22, 14, 102) formed from a rear tubular part (22) supporting a skirt (14) and, with the aid of an unrolling diaphragm (12), defining a front chamber (16) connected permanently to a vacuum source and a rear chamber (18) connected selectively to the front chamber (16) or to the atmosphere by a valve means (136, 138, 140) actuated by a control rod (34) capable of bearing by means of a plunger (32) on one of the faces of a reaction disk (58) fixed to a push rod (56), a return spring (150) for the control rod (34) being arranged between the skirt (14) of the piston and the plunger (32), the valve means (136, 138, 140) possessing a shutter (138) interacting by an active part made rigid by an insert (118) with a first valve seat (136) formed on the plunger (32) and with a second valve seat (140) formed on the piston (14), the shutter (138) being formed by a flexible tubular diaphragm (114), the active part of the shutter (138) being located between the two ends (112, 116) of the flexible tubular diaphragm (114) characterized in that the shutter (138) possesses orifices (120) allowing communication between the front chamber (16) and the rear chamber (18).

2. Booster according to Claim 1, characterized in that the orifices (120) made in the shutter (138) are located in its active part between the first valve seat (136) and the second valve seat (140).

3. Booster according to Claim 1, characterized in that the piston (22, 14, 102) possesses, furthermore, an intermediate piston web (102) defining with the skirt (14) of the piston an annular volume (123).

4. Booster according to Claim 1, characterized in that the second valve seat (140) is formed on the skirt (14) of the piston.

5. Booster according to Claims 1, 2, 3 and 4, characterized in that the first (136) and second (140) valve seats and the shutter (138) are arranged in the valve seats and the shutter (138) are arranged in the annular volume (123).

6. Booster according to Claim 5, characterized in that orifices (142) are made in the skirt (14) in order to put the front chamber (16) in communication with the annular volume (123), and in that orifices (144) are made in the intermediate web (102) in order to put the rear chamber (18) in communication with the annular volume (123).

7. Booster according to any of the preceding claims, characterized in that orifices (146) are made in the plunger (32) in order to put the annular volume (123) in communication with the atmosphere.

8. Booster according to Claim 7, characterized in that the orifices (146, 120, 142 144) made in the plunger (32), the shutter (138), the skirt (14) and the web (102) are uniformly distributed about the axis of symmetry of the booster, are of equal number and have centers located in the same plane.
